Europäisches Patentamt

European Patent Office

Office européen des brevets

(19)

(11) Numéro de publication: **O 024 220**
**B1**

(12) **FASCICULE DE BREVET EUROPEEN**

(45) Date de publication du fascicule du brevet: **19.10.83**

(51) Int. Cl.³: **B 29 F 3/10, B 05 D 7/22**

(21) Numéro de dépôt: **80401056.9**

(22) Date de dépôt: **11.07.80**

(54) Procédé de fabrication d'un tube composite métal-matière plastique et appareillage pour sa mise en oeuvre.

(30) Priorité: **21.08.79 FR 7921059**

(43) Date de publication de la demande:
**25.02.81 Bulletin 81/8**

(45) Mention de la délivrance du brevet:
**19.10.83 Bulletin 83/42**

(84) Etats contractants désignés:
**AT BE CH DE GB IT LI LU NL SE**

(56) Documents cités:
**DE - A - 1 629 736**
**DE - A - 2 311 192**
**DE - B - 1 088 223**
**FR - A - 1 385 944**
**US - A - 2 820 249**
**US - A - 3 896 764**
**US - A - 4 161 379**

(73) Titulaire: **Ollivier, Jean**
**"Le Plessis"**
**F-85290 Mortagne-sur-Sevre (Vendée) (FR)**

(72) Inventeur: **Blandin, Jean-Claude**
**3, Allée des Criquets**
**F-49700 Cholet (Maine-et-Loire) (FR)**

(74) Mandataire: **Chevallier, Robert et al,**
**Cabinet BOETTCHER 23, rue La Boétie**
**F-75008 Paris (FR)**

Courier Press, Leamington Spa, England.

## Procédé de fabrication d'un tube composite métal-matière plastique et appareillage pour sa mise en oeuvre

L'invention a pour objet un procédé de fabrication en continu d'un tube composite comprenant une partie métallique et au moins une partie intérieure en matière plastique.

On connaît déjà des procédés de ce genre, par exemple par le brevet français N° 1 385 944 de la Société américaine Continental Can Company dans lequel on confectionne un tube métallique à partir d'un feuillard refermé sur lui-même et soudé longitudinalement; aussitôt après l'exécution de la soudure, on injecte dans le tube obtenu une couche de matière plastique qui constitue une couche intérieure de garnissage de la surface métallique. Selon ce même brevet, pour faciliter l'adhérence de la matière plastique au métal, on crée une dépression entre le tube métallique et la matière plastique en aval d'une filière qui fournit cette matière sous forme d'un cône qui s'élargit et qui finit par se plaquer sur la surface intérieure du métal. Il est possible aussi, en variante, d'exercer à la place de la dépression, une surpression dans la partie du tube composite située en aval de la filière.

Le tube métallique revêtu de matière plastique décrit dans le brevet précité est destiné à être découpé en tronçons assez courts devant constituer le corps de boîtes qui sont fermées ensuite par un fond et par un couvercle. Il est important que la matière plastique adhère bien au métal mais on doit reconnaître que les boîtes ainsi fabriquées ne sont pas soumises au cours de leur utilisation à des contraintes mettant à l'épreuve cette adhérence.

Le but principal de l'invention est de réaliser un tube composite comprenant une partie métallique et au moins une partie intérieure en matière plastique, de préférence avec une partie extérieure en matière plastique aussi, utilisable en plomberie pour l'alimentation et/ou l'evacuation de divers appareils domestiques tels que lavabos, baignoires, douches, éviers, etc. . . . Un tube de ce genre doit supporter des traitements qui imposent des contraintes sévères à l'adhérence entre le métal et la matière plastique. Par exemple, sur les circuits d'eau chaude, le tube composite doit supporter de nombreux cycles d'échauffement et de refroidissement successifs entre la température ambiante et 100°C, sans aucun risque de décollement du métal et de la matière plastique.

Jusqu'à présent, on s'est servi couramment de tubes en cuivre ou en plomb. Ces deux métaux ont des qualités et des défauts. Le cuivre recuit s'incurve et se courbe facilement mais il est difficile ensuite de le redresser parfaitement. Le plomb est très malléable; il se courbe et se redresse assez facilement mais il n'a pas une rigidité suffisante en comparaison du cuivre, et, de plus, il se déforme par fluage même à la température ambiante.

L'invention a pour but de parvenir à un tube composite qui soit complètement inerte par rapport à l'eau, grâce à une couche intérieure de matière plastique, et qui réunisse les avantages du cuivre et du plomb sans en avoir les inconvénients. En bref, l'invention vise à obtenir un tube composite aussi malléable que le plomb et aussi rigide que le cuivre, de façon qu'on puisse l'incurver et le redresser facilement et qu'il conserve sa forme même à une température continue de 80°C.

Il est certain que ceci implique une excellente adhérence entre le métal et la matière plastique, à un degré qui n'est pas nécessaire avec le tube composite du brevet cité plus haut et que ce tube composite ne présente pas.

Pour arriver à ce résultat, on confectionne un tube à partir d'un feuillard que l'on soude longitudinalement et, selon le procédé de l'invention le feuillard est en aluminium, on extrude à l'intérieur du tube obtenu une première couche de polyéthylène greffé puis une seconde couche de matière plastique qui recouvre la première couche.

Selon une autre caractéristique de l'invention, on referme et on soude le feuillard métallique autour d'une unique filière d'extrusion qui présente un canal interne annulaire ayant à son extrémité amont deux entrées concentriques l'une extérieure pour le polyéthylène greffé et l'autre intérieure pour l'autre matière plastique, et à son extrémité aval une unique sortie annulaire.

De préférence, on adopte comme polyéethylène devant constituer la seconde couche un polyéthylène de type réticulable.

Dans de nombreuses circonstances, il est souhaitable de déposer aussi un revêtement sur la surface extérieure du tube métallique pour assurer la protection de ce dernier. Dans ce cas, selon l'invention, on dépose d'abord une première couche de polyéthylène greffé sur la surface du tube puis une seconde couche de polyéthylène, de préférence réticulable.

Dans le procédé de l'invention l'emploi de l'aluminium procure, par sa combinaison avec les couches de polyéthylène greffé et de polyéthylène réticulable, un tube composite ayant une totale inertie vis-à-vis des liquides véhiculés jusqu'à 100°C et alliant de manière particulièrement satisfaisante les qualités de malléabilité et de rigidité du plomb et du cuivre.

A cet effet, selon l'invention, pour un tube composite ayant une grosseur allant couramment de 8 à 14 mm pour ce genre de tube il est avantageux de se servir d'un feuillard en aluminium ayant une épaisseur de 0,2 mm environ et de déposer, à l'intérieur et à l'extérieur, un revêtement comprenant une couche de polyéthylène greffé de l'ordre de 0,1 mm d'épaisseur et une couche de polyéthylène réticulable de l'ordre de 0,7 mm d'épaisseur.

L'invention couvre aussi une filière d'extrusion comprenant une partie allongée dont la face extérieure est utilisable comme moyen participant à la soudure du tube métallique en aluminium et dont l'intérieur présente un canal annulaire ayant une extrémité amont avec deux entrées coaxiales et une extrémité aval, avec une unique sortie annulaire.

Pour mieux faire comprendre l'invention, on donnera maintenant une description d'un exemple de mise en oeuvre du procédé de l'invention. On se reportera aux dessins annexés dans lesquels:

— la figure 1 est une représentation schématique en élévation montrant l'ensemble d'une machine pour la fabrication d'un tube composite,

— la figure 2 est une vue agrandie de côté et en coupe par un plan vertical d'une filière d'extrusion intérieure conforme à l'invention, faisant partie de la machine de la figure 1,

—la figure 3 est une vue de dessus en coupe par un plan horizontal d'une filière combinée d'extrusion pour la coextrusions d'un polyéthylène greffé à l'intérieur et à l'extérieur et d'un polyéthylène réticulable à l'intérieur et à l'extérieur du tube, à partir de deux extrudeuses, pour la machine de la figure 1,

— la figure 4 est une vue de détail en coupe selon IV—IV de la figure 3.

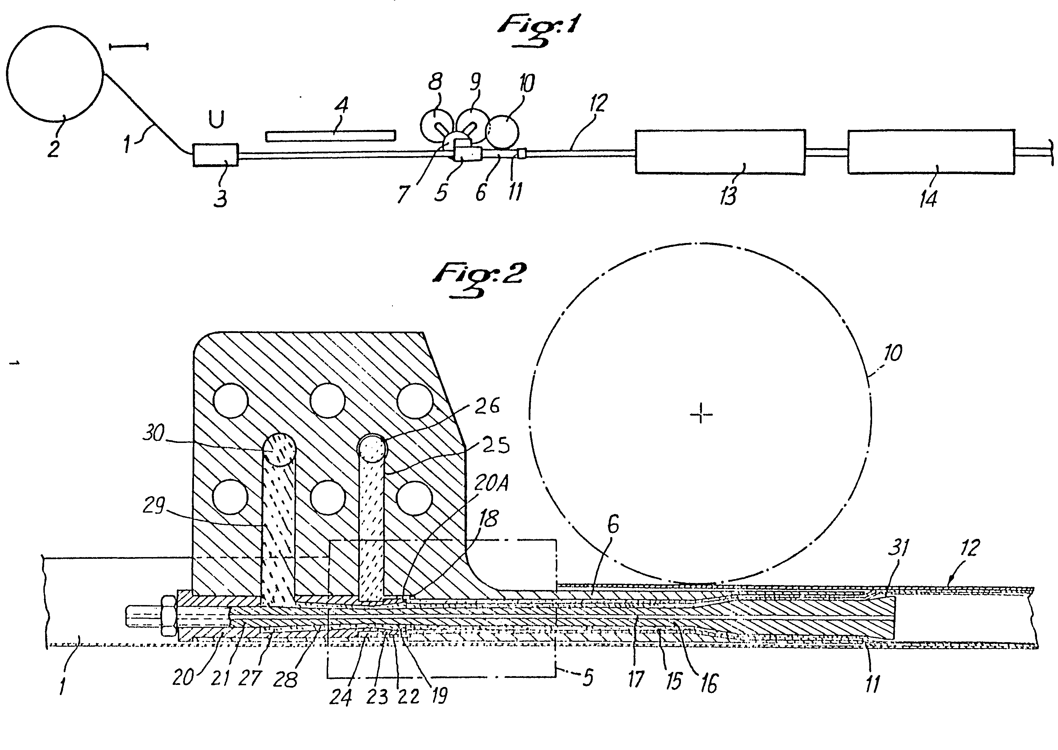

On mentionnera d'abord rapidement les organes successifs d'une machine comme celle de la figure 1 qui est déjà connue dans son ensemble, et on décrira ensuite en détail les organes nouveaux apportés à cette machine par l'invention.

Un feuillard en aluminium 1 enroulé à plat en rouleau 2 est dévidé pour passer à travers un premier organe 3 de conformation suivi d'un moyen de chauffage 4 1ui s'élève à 150°C environ la température du feuillard conformé en U. Ce dernier arrive ensuite à un organe 5 de conformation en tube fermé, connu en soi, qui est associé à une filière d'extrusion 6. Celle-ci est combinée à un organe 7 d'alimentation en matière plastique de la filière 6. Cet organe 7 est lui-même raccordé à la fois respectivement à la sortie de deux extrudeuses 8 et 9. La filière 6 est prolongée suffisamment pour coopérer avec un moyen de soudure qui confectionne le tube métallique en le fermant par une soudure longitudinale.

Le moyen de soudure est d'un type quelconque approprié. Dans le présent exemple, il est constitué par un générateur d'ultrasons ayant une molette 10 qui effectue la soudure quand le feuillard refermé est supporté intérieurement par la surface extérieure de la filière 6. Cette dernière se termine par une extrémité aval 11 par laquelle sort le tube soudé revêtu de matière plastique, intérieurement.

Dans la description donnée ici en exemple de la mise en oeuvre du procédé de l'invention, le feuillard en aluminium (1) de qualité H 24 a une épaisseur de 0,2 mm. Aussitôt après la soudure réalisée par la molette 10, on dépose sur la face intérieure et sur la face extérieure du tube obtenu un revêtement composé d'une première couche de polyéthylène greffé ayant une épaisseur de 0,1 mm, mise directement en contact avec le métal, et d'une seconde couche de polyéthylène réticulable ayant une épaisseur de 0,7 mm, déposée directement sur la première couche.

Le tube 12 obtenu après la sortie 11 passe dans un bac 13 d'eau de refroidissement. Son déplacement est assuré par un chenille de traction 14 installée après le bac 13.

Ainsi qu'on l'a déjà dit, le revêtement extérieur est souhaitable mais non obligatoire. De même, on pourrait déposer le revêtement extérieur par une opération distincte du dépôt du revêtement intérieur, exécutée ultérieurement sur un tube déjà garni intérieurement.

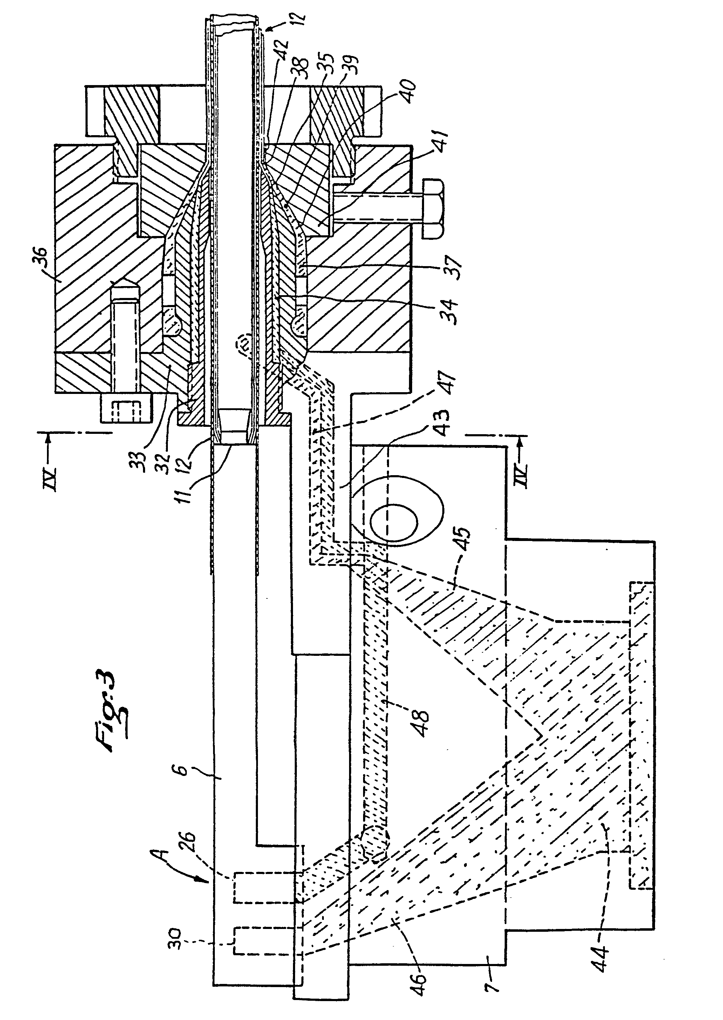

La figure 2 montre en coupe comment est réalisé, selon l'invention, la filière 6 permettant de déposer, par une seule opération, deux couches différentes superposées à l'intérieur du tube. Pour faciliter la compréhension, on a représenté en trait mixte sur la figure 2, l'organe de conformation 5 qui transforme le feuillard 1 en tube refermé, ainsi que la molette 10 qui soude ce tube.

La filière 6 a un canal annulaire intérieure 15 qui est défini par un poinçon 16 monté et soutenu par sa partie extrême opposée à la sortie 11. Ce poinçon 16 est percé en son centre d'un passage 17 servant à insuffler de l'air dans le tube composite.

Le canal annulaire 15 se termine en aval par la sortie 11 et il a, en amont, deux entrées concentriques l'une extérieure 18 et l'autre intérieure 19. Ces entrées sont définies matériellement grâce à un manchon 20 qui contient la partie extrême 21 par laquelle est supporté le poinçon 16. Le manchon 20 se termine par un face extrême 20A dans une chambre 22 qui est située juste au commencement du canal annulaire 15. La partie extrême 23 du manchon 20 a un diamètre inférieur à celui de la chambre 20 et présente une gorge circulaire 24 en face de laquelle un trou 25 débouche dans la chambre 22. Le trou 25 communique avec un conduit 26 d'arrivée du polyéthylène greffé provenant de l'extrudeuse 9.

En amont de la chambre 22, le manchon 20 est ajusté dans le corps de la filière et il est creusé intérieurement, autour du poinçon 16, d'un chambrage 27. Ce dernier est prolongé par un canal annulaire 28 limité intérieurement par le poinçon 16. Ce canal 28 débouche dans la face extrême 20A. Cette face est disposée à faible distance du commencement du canal 15. Grâce à cet agencement, ce dernier a deux entrées, l'une 18 qui est constituée par la partie annulaire de la chambre 22 qui entoure le manchon 20, l'autre 19 par le canal annulaire 28 qui s'ouvre dans la face extrême 20A. A son extrémité opposée le chambrage 27 est en communication avec un trou 29 qui communique lui-même avec un conduit 30 d'arrivée du polyéthylène réticulable provenant de l'extrudeuse 8.

Pendant le fonctionnement, les deux matières plastiques différentes entrent simultanément dans le canal 15, ainsi qu'on l'a dessiné à l'aide de hachures à inclinaisons inverses. Les deux courants annulaires et concentriques restent en contact sans se mélanger et sont repoussés après la sortie commune 11 contre la face intérieure métallique du feuillard soudé. Cet effet est favorisé par un évasement 31 de l'extrémité du poinçon 16 qui s'étend en dehors de la sortie 11 de la filière et par la pression de l'air insufflé dans le tube 12 par le passage 17 du poinçon 16.

Dans cet exemple, la couche venant en contact avec l'aluminium est du polyéthylène greffé à partir d'acide acrylique que l'on trouve dans le commerce sous la marque PEG de la Compagnie Française de Raffinage. Il adhère fermement à l'aluminium et il est recouvert par la couche de polyéthylène réticulable qui est, ici, du type copolymère éthylène silylé vendu dans le commerce sous la marque Sioplas E de la Société américaine Dow Corning.

Ainsi qu'on l'a déjà dit, on pourrait recouvrir ultérieurement le tube en aluminium de deux couches extérieures de polyéthylène.

Il est avantageux de procéder à cette opération simultanément à l'opération de garnissage intérieur que l'on vient de décrire. On peut utiliser alors l'appareillage illustré par la figure 3.

Cet appareillage comprend la filière 6 de la figure 2, de laquelle sort le tube 12 revêtu intérieurement. Peu après son passage par la sortie 11 de la filière, le tube 12 entre dans une douille 32 qui lui est concentrique et dans laquelle il est guidé pendant son déplacement. La douille 32 est elle-même vissée dans un fourreau 33 qui lui est concentrique et avec lequel elle limite une chambre annulaire 34 qui se termine en aval par une sortie annulaire 35. En fait, cette sortie 35 débouche dans une face extrême en tronc de cône constituée par les faces extrêmes tronconiques qui se complètent du fourreau 33 et de la douille 32. Le fourreau 33 est lui-même monté dans une pièce porteuse 36 avec laquelle il limite une chambre annulaire 37 extérieure et concentrique à la chambre 34. Cette chambre 37 se termine en aval par une sortie annulaire 38 à laquelle elle aboutit après une partie annulaire tronconique 39 à section progressivement décroissante. Cette partie 39 est limitée par les faces extrêmes tronconiques du fourreau 33 et de la douille 32 d'une part et par un face intérieure tronconique 40 d'une pièce 41 logée dans un évidement de la pièce 36. Dans la pièce 41, la face intérieure tronconique 40 se termine par une sortie 42 qui entoure et qui guide le tube 12 terminé, revêtu intérieurement et extérieurement.

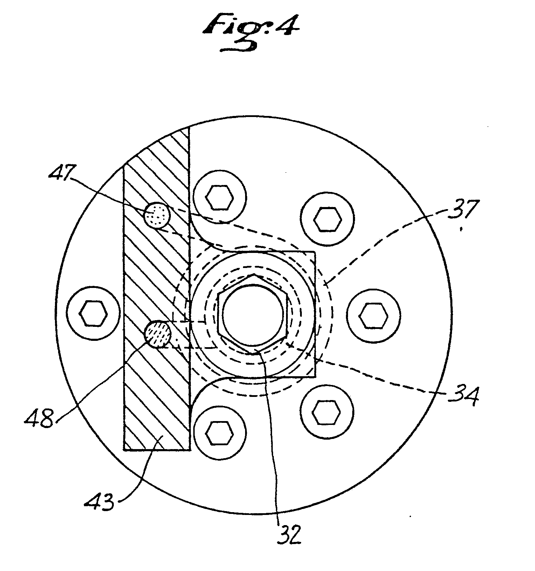

L'ensemble que l'on vient de décrire est tenu dans l'axe de défilement du feuillard 1 refermé autour de la filière 6 grâce à sa fixation à l'organe 7 d'alimentation par l'intermédiaire d'un support 43. La filière 6 est réunie à l'organe 7 d'alimentation au moyen de vis par une de ses faces latérales où débouchent les conduits 30 et 26. Au support 43 est accouplé l'organe 7 d'alimentation dans lequel une arrivée 44 de polyéthylène réticulable se divise en deux branches 45 et 46 qui aboutissent respectivement d'une part au conduit 30, d'autre part à la chambre 37 grâce à un canal 47. Celui-ci s'étend à travers le support 43 et le fourreau 33 à partir de la branche 45 jusqu'à la chambre 37. Un autre canal 48 est foré dans l'organe 7 et le fourreau 33 pour réunir le conduit 26 de la filière 6 à la chambre 34. Sur la figure 3, le canal 48 se trouve sous le canal 47 sur une partie de sa longueur, ainsi que la figure 4 permet de le comprendre.

Le conduit 26 est alimenté par l'extrudeuse 9. Sur la figure 1, les extrudeuses 8 et 9 sont représentées côte-à-côte d'un même côté de la filière 6. Cette disposition n'est que schématique. Quand l'extrudeuse 8 est d'un côté de la filière 6, comme sur la figure 3, l'extrudeuse 9 peut être placée sur le côté opposé, pour injecter le polyéthylène greffé en A, dans le conduit 26; il suffit de ménager la place nécessaire à la molette 10 (non dessinée sur la figure 3) entre cette extrudeuse 9 et la sortie 11 de la filière 6.

On dispose ainsi d'un appareillage comprenant une première filière, décrite en référence à la figure 2, et une seconde filière qui est montée en aval de la première, coaxialement à celle-ci; cette seconde filière a également deux entrées distinctes coaxiales 34 et 37 et une sortie unique commune 38.

A l'aide de cet appareillage, le tube soudé est revêtu intérieurement après la sortie 11 de la filière 6, comme on l'a expliqué plus haut, et il est revêtu extérieurement très peu de temps après, à sa sortie de la douille 32 et du fourreau 33.

Le polyéthylène greffé rencontre à la sortie 35 le polyéthylène réticulable et il l'accompagne jusqu'à la sortie commune 38. Ici aussi, le polyéthylène greffé arrive en contact avec le tube en aluminium et il assure une bonne adhérence avec ce dernier.

Ultérieurement, le tube terminé 12 est soumis à une opération, connue en soi, dans un bain d'eau à 90°C qui provoque la réticulation de la couche de polyéthylène réticulable.

On notera que l'extrusion simultanée par une seule sortie des deux couches intérieures est intéressante, selon une caractéristique du procédé de l'invention quand le tube a un diamètre plutôt faible. Un tube de très gros diamètre permettrait plus facilement la mise en place de deux filières ou d'une filière à deux sorties distinctes. Selon une autre variante de l'invention, la seconde couche de matière plastique peut être choisie en fonction de l'emploi envisagé du tube composite et n'est pas forcément du polyéthylène réticulable.

En toutes circonstances, quelle que soit la destination finale du tube composite, il est avantageux de se servir de la filière combinée décrite plus haut grâce à laquelle une première extrudeuse fournit le polyéthylène greffé à la fois pour l'intérieur et pour l'extérieur cependant qu'une seconde extrudeuse fournit la seconde couche de matière plastique à la fois pour l'intérieur et pour l'extérieur, la couche de polyéthylène greffé provenant de la première extrudeuse garantissant l'adhérence à l'aluminium de la matière sortant de la seconde extrudeuse.

## Revendications

1. Procédé pour la fabrication d'un tube composite obtenu à partir d'un feuillard métallique refermé et soudé, revêtu au moins intérieurement d'une couche au moins de matière plastique extrudée à l'intérieur du tube après sa fermeture par soudure, caractérisé en ce qu'on utilise un feuillard en aluminium et on extrude à l'intérieur du tube une première couche de polyéthylène greffé et une seconde couche de matière plastique.

2. Procédé selon la revendication 1 caractérisé en ce qu'on extrude simultanément les deux couches à l'intérieur du tube à l'aide d'une filière ayant un canal interne annulaire avec deux entrées coaxiales à son extrémité amont et une unique sortie annulaire à son extrémité aval.

3. Procédé selon la revendication 1 caractérisé en ce qu'on dépose aussi sur la face extérieure du tube métallique soudé une première couche de polyéthylène greffé et une seconde couche de matière plastique.

4. Procédé selon l'une quelconque des revendications 1 à 3 caractérisé en ce qu'on dépose comme matière plastique constituant la seconde couche un polyéthylène réticulable.

5. Filière d'extrusion intérieure pour la mise en oeuvre du procédé selon la revendication 2 caractérisée en ce qu'elle comprend une partie allongée (6) dont la face extérieure est utilisable comme moyen participant à la soudure du tube métallique (12) en aluminium et dont l'intérieur présente un canal annulaire (15) ayant une extrémité amont avec deux entrées (18, 19) concentriques et une extrémité aval avec une unique sortie annulaire.

6. Appareillage pour la mise en oeuvre du procédé selon la revendication 3 caractérisé en ce qu'il comprend une première filière selon la revendication 5 et une seconde filière disposée en aval de la première filière et coaxialement à celle-ci, cette seconde filière ayant deux entrées distinctes (34, 37) et une sortie unique commune (38).

7. Appareillage selon la revendication 6 caractérisé en ce que la première et la seconde filière sont montées sur un organe commun (7) dans lequel sont creusés des canaux (45, 46) qui alimentent simultanément à partir d'une même tête d'extrusion respectivement les deux entrées correspondantes à l'une et à l'autre matière plastique des deux filières.

8. Tube composite comprenant un tube métallique revêtu intérieurement et extérieurement de matière plastique, obtenu par la mise en oeuvre du procédé selon la revendication 3, caractérisé en ce que le tube métallique est en aluminium et la matière plastique est composée, sur chaque face intérieure et extérieure, par une première couche de polyéthylène greffé et par une seconde couche de polyéthylène réticulé.

## Patentansprüche

1. Verfahren zum Herstellen eines aus Metall-Kunststoff bestehenden Verbundrohres, das von einem wieder geschlossenen und verschweissten metallischen Bandmaterial ausgeht, welches zumindest innen mit einer Beschichtung verkleidet wird, die mindestens aus einem im Inneren des Rohres nach dessen Verschliessen mittels Verschweissen extrudierten Kunststoff besteht, dadurch gekennzeichnet, dass ein Bandmaterial aus Aluminium verwendet wird und dass im Inneren des Rohres eine erste Schicht aus gepfropftem Polyethylen und eine zweite Schicht aus Kunststoff extrudiert wird.

2. Verfahren nach Anspruch 1, dadurch gekennzeichnet, dass man die beiden Schichten im Inneren des Rohres mittels einer Strangpressdüse gleichzeitig extrudiert, die einen ringförmigen Innenkanal mit zwei koaxialen Einlässen am stromaufwärtigen Ende desselben aufweist, sowie einen einzigen ringförmigen Auslass an seinem stromabwärtigen Ende.

3. Verfahren nach Anspruch 1, dadurch gekennzeichnet, dass man auf der Aussenfläche des verschweissten Metallrohres ferner eine erste Schicht aus gepfropftem Polyethylen und eine zweite Schicht aus Kunststoff aufträgt.

4. Verfahren nach einem der Ansprüche 1 bis 3, dadurch gekennzeichnet, dass für die zweite Schicht aus Kunststoff ein vernetzbares Polyethylen aufgebracht wird.

5. Strangpressdüse zum Strangpressen im Inneren eines zu beschichtenden Rohres zur Durchführung des Verfahrens nach Anspruch 2, dadurch gekennzeichnet, dass die Strangpressdüse einen länglichen Abschnitt (6) aufweist, dessen Aussenseite als Einrichtung dient, die am Verschweissen des aus Aluminium bestehenden Metallrohres (12) mitwirkt und dessen Innenbereich einen ringförmigen Innenkanal (15) aufweist, der ein stromaufwärtiges Ende mit zwei konzentrischen Einlässen (18, 19) sowie ein stromabwärtiges Ende mit einem einzigen ringförmigen Auslass aufweist.

6. Vorrichtung zur Durchführung des Verfahrens nach Anspruch 3, gekennzeichnet durch eine erste Strangpressdüse gemäss Anspruch 5 und eine zweite Strangpressdüse, die stromabwärts der ersten Strangpressdüse und koaxial zu dieser angeordnet ist und die zwei getrennte Einlässe (34, 37) und einen gemeinsamen Auslass (38) hat.

7. Vorrichtung nach Anspruch 6, dadurch gekennzeichnet, dass die erste Strangpressdüse und die zweite Strangpressdüse auf einem gemeinsamen Element (7) angeordnet sind, in welchem Kanäle (45, 46) ausgebildet sind, die gleichzeitig, ausgehend von einem nämlichen Strangpresskopf, jeweils die beiden Einlässe beschicken, die dem einen und dem anderen Kunststoff der beiden Strangpressdüsen zugeordnet sind.

8. Verbundrohr, welches aus einem Metallrohr besteht, das innen und aussen mit Kunststoff beschichtet ist und welches mittels Durchführung des Verfahrens nach Anspruch 3 erhalten wird, dadurch gekennzeichnet, dass das Metallrohr aus Aluminium besteht und dass der Kunststoff auf der Innen- und Aussenseite des Rohres jeweils durch eine erste Schicht aus gepfropftem Polyethylen und eine zweite Schicht aus vernetzbarem Polyethylen gebildet wird.

## Claims

1. A method of manufacture of a composite tube obtained from a metal ribbon closed and welded and coated at least internally with one layer at least of a plastic substance extruded inside the tube after its closure by welding, characterized in that the ribbon employed is of aluminium and there is extruded inside the tube a first layer of graft polyethylene and a second layer of a plastic substance.

2. A method as in Claim 1, characterized in that the two layers are extruded simultaneously inside the tube by means of a die having an inner annular channel having two coaxial inlets at the upstream end of it and a single annular outlet at its downstream end.

3. A method as in Claim 1, characterized in that there is also deposited on the outer face of the welded metal tube a first layer of graft polyethylene and a second layer of a plastic substance.

4. A method as in any one of the Claims 1 to 3, characterized in that the plastic substance deposited to form the second layer is a crosslinkable polyethylene.

5. A die for internal extrusion for implementing the method as in Claim 2, characterized in that it comprises an elongated portion (6) the outer face of which can be employed as a means participating in the welding of the aluminium metal tube (12) and the interior of which exhibits an annular channel (15) having an upstream end with two concentric inlets (18, 19) and a downstream end with a single annular outlet.

6. Equipment for implementing the method as in Claim 3, characterized in that it comprises a first die as in Claim 5 and a second die arranged downstream of the first die and coaxially with it, this second die having two distinct inlets (34, 37) and a single common outlet (38).

7. Equipment as in Claim 6, characterized in that the first and the second dies are mounted on a common member (7) in which are hollowed out channels (45, 46) which feed simultaneously from one and the same extrusion head the two inlets respectively, which correspond with the respective plastic substances from the two dies.

8. A composite tube comprising a metal tube coated internally and externally with plastic substances and obtained by implementation of the method as in Claim 3, characterized in that the metal tube is of aluminium and the plastic substance is composed on the respective inner and outer faces, of a first layer of graft polyethylene and a second layer of cross-linked polyethylene.

*Fig.1*

*Fig.2*

*Fig:3*

0024 220

# Fig. 4